(19) Europäisches Patentamt
European Patent Office
Office européen des brevets

(11) EP 3 016 446 A1

(12) EUROPEAN PATENT APPLICATION

(43) Date of publication:
04.05.2016 Bulletin 2016/18

(51) Int Cl.:
H04W 52/02 (2009.01)

(21) Application number: 14382431.6

(22) Date of filing: 03.11.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Vodafone IP Licensing Limited
The Connection
Newbury
Berkshire RG14 2FN (GB)

(72) Inventors:
• Pansana, Lorenzo
E-28042 Madrid (ES)
• De Pasquale, Andrea
E-28042 Madrid (ES)
• Edwards, Paul
E-28042 Madrid (ES)

(74) Representative: Boult Wade Tennant
Verulam Gardens
70 Gray's Inn Road
London WC1X 8BT (GB)

(54) **Method for improving energy efficiency of a telecommunication network**

(57) There is provided a method for determining activation of a capacity layer (1) in a radio access network (RAN) for serving a user device (UD), the determination based on both geographical position of the user device (UD), and traffic requirements of the UD via application awareness.

FIG. 3

EP 3 016 446 A1

**Description**

TECHNICAL FIELD

The present invention relates to generally to radio access networks (RAN) and, more specifically, relates to energy savings by layer activation/deactivation in RANs.

BACKGROUND

For telecommunication infrastructures and providers, reducing the expenses due to the energy consumption, especially in the radio access network (RAN), is an increasing priority. Even if several solutions for energy effectiveness are implemented, such as using the latest and most efficient hardware or adopting an energy-efficient site infrastructure design, intelligent software running in the RAN aiming at reducing the average energy consumption is nowadays being developed.

These software solutions usually aim at decreasing the network power consumption by switching off network resources during periods of low traffic. Typically, this concept applies to a network where both a coverage layer and a capacity layers are provided, and these solutions may be extended to all radio access technologies RAT (2G, 3G, 4G). In a given RAT where multiple frequency bands are used, the coverage layer is the one at the lowest frequency, whilst the capacity layer is the one at the highest frequency. The capacity layer has therefore a lower coverage radius, and is typically used to boost performance. For instance, in a dual layer LTE network at 800MHz and 2600 MHz, the coverage layer is the first one and the capacity layer the latter.

Energy saving solutions existing in the prior art targeting at switching off capacity layers for a period of time already exist in the prior art. Some of the prior art is the following:

- WO2014024001A1 describing interference reduction through cell activation methods in heterogeneous networks and in
- US20110044284A1 disclosing energy-saving mechanisms in a heterogeneous radio communication network.

Referring to traffic requirements of a particular UD solutions exist such as MIMO/SIMO switching for energy saving, but they do not take into account the actual benefit for said particular UD. Said solutions usually take into account the fact that the traffic load varies during the day, and in some periods of time the amount of traffic can be handled by the coverage layer, without activating the capacity layer.

The mentioned prior-art decision-making mechanisms on the activation of the capacity layer are based on the traffic load on the coverage layer. However, this traffic may be generated by user devices whose position allows them to be served by the coverage layer, but not by the capacity layer. In this case, the activation of the capacity layer brings no benefits and the traffic load in the coverage layer is not improved or reduced.

It is desirable to provide a solution that solves the above-mentioned problems with the prior art, allowing the network to be more energy efficient by making a more intelligent decision about use of the coverage and capacity layers.

STATEMENT OF THE INVENTION

The present invention provides a solution for the aforementioned problem by a method for determining activation of a capacity layer according to claim 1, a method for determining the deactivation of a capacity layer according to claim 10, a node according to claim 13 and a RAN according to claim 14. Dependent claims define particular embodiments of the invention. All the features described in this specification (including the claims, description and drawings) and/or all the steps of the described method can be combined in any combination, with the exception of combinations of such mutually exclusive features and/or steps.

In particular, in a first aspect of the invention there is provided a method for determining activation of a capacity layer in a radio access network (RAN) for serving a user device (UD):

- geographical position of the user device (UD), and
- traffic requirements of the UD.

In the scope of this specification, a "capacity layer" is a layer covering a range that underlies a coverage area of a "coverage layer". A coverage layer may be mainly used for covering the territory, which in a particular embodiment of LTE radio access technology (RAT) resides in the 800MHz spectrum, and the capacity layer may cover a smaller extension boosting capacity and performance in high-traffic areas; in the particular case of LTE RAT the capacity layer may reside in the 2,6GHz spectrum. In current scenarios there exist "dual layer" sites, in which two layers, can be represented as concentric circles with one common focus. The coverage layer typically uses a lower frequency than the capacity layer, and therefore in these cases the radius of the coverage layer is larger than the capacity layer for physics law.

This solution takes into account network information obtained from UD, namely, the UD location, or geographical position within the RAN, as well as information about applications or traffic requirements details, for deciding to activate or not to activate a capacity layer to complement or boost an existing coverage layer.

Advantageously, by checking the UD location it may be first determined whether the UD can be served by the capacity layer. By taking into account information about traffic requirements of applications -application awareness-, it may be determined whether the UD is a bandwidth intensive user which will benefit from capacity layer activation directly. By taking into account the actual throughput requirements of the UDs as a condition to activate the capacity layer, the activation of the capacity layer is only done when strictly required, and therefore the whole system will be more energy efficient than if the capacity layer was activated without any consideration of the throughput requirements of the UDs. In the scope of the present specification, direct benefit is to be understood as a benefit in terms of traffic becoming available for a particular UD obtained by transferring the particular UD to the capacity layer.

In an embodiment of the invention the determination is further based on further UDs in the RAN.

Once more, by taking into account information about traffic requirements of applications, it may be determined whether the UD is a bandwidth intensive user which will benefit from capacity layer activation either directly or indirectly. In the scope of this embodiment and following embodiments, indirect benefit is to be understood as a benefit in terms of traffic becoming available for a UD obtained by the transfer (handover) towards the capacity layer of other one or more further UDs in the RAN, in the same coverage or capacity layer as the particular UD. As mentioned above, this will results in a more energy efficient system.

As an example, in a scenario where the capacity layer is inactive because of low traffic, as the traffic grows on the coverage layer, traditional algorithms may trigger the activation of the capacity layer once a certain traffic threshold is reached without distinction of providing actual benefit with such action, i.e. without distinction of providing an actual benefit for a UD, since said UD for which a capacity layer may be activated may not be covered by the capacity layer.

However, in the present solution, before the activation of the capacity layer the method would check the location of the users which maybe out of reach of the capacity layer and their application-traffic requirements which may be very low, e.g. for instant messaging. Advantageously, taking into account the above mentioned two conditions (traffic requirements -application awareness- and location) leads to energy savings as the activation of the capacity layer is optimally and efficiently performed, i.e. reducing the activation time of the capacity layer to those moments where it actually brings benefits to the UDs.

As explained above, this solution defines the combined usage of "location awareness" i.e. where the users are located and "application-awareness", which is the knowledge of the kind of traffic and associated network requirements such as throughput, in bps for example, run in real-time on the user device connected to the RAN. The combination of these two pieces of information is considered in the decision-making method according to the invention to decide whether a capacity layer should be in active or inactive state.

The advantages associated with the invention are that there exist an optimization of the consumption of the network given the predetermined network conditions - including the amount of required traffic and the location of the users.

In an embodiment of the invention the determination to activate the capacity layer is further based on whether:

- the geographical position of the UD is in the range of the capacity layer, and
- the traffic requirements of the UD are not satisfied by a coverage layer to which the UD may be connected.

This embodiment allows activating the capacity layer for those UDs operating under the capacity layer and for which a boost in their traffic capacity is needed. Advantageously this embodiment takes into account the position of the UD since, as a difference with the state of the art, a real benefit would only be offered if the UD for which the capacity layer is being activated is under the coverage of the capacity layer.

In an embodiment of the invention the determination to activate the capacity layer is further based on whether an improvement in the traffic situation in the UD is improved by activating the capacity layer for said UD.

Advantageously the invention comprises a supervision of whether there is an actual benefit on the activation of a capacity layer. Even in cases where a high traffic is detected in a cell, since it may be due to users whose position allows them to be served by the coverage layer, but not by the capacity layer, the combination of mechanisms defined by the invention make possible to supervise or check whether the traffic provided by activating the capacity layer for each UD would provide a real improvement in the service. As it may be noticed, the state of the art mechanisms base their decisions to activate a capacity layer mainly on the traffic in the cell as a whole; however, the defined invention takes into account the real-time throughput on each UD in the cell, either in the capacity layer or in the coverage layer.

The determination to activate the capacity layer may be based on whether the improvement in the traffic situation in the UD is at least "tangible", where tangible may mean that the extra bandwidth given by the activation of the coverage layer is actually needed by the UD, given the applications running on it and their throughput requirements.

In an embodiment of the invention wherein a particular UD is connected to the coverage layer, there exist at least a further UD connected to the coverage layer and under the reach of the capacity layer, and the determination to activate the capacity layer for serving at least the further UD is based on whether the following conditions are met:

- the particular UD is not in the range of the capacity layer,
- the traffic requirements of the particular UD are not satisfied by the coverage layer, and
- the further UD in the coverage layer is in the range of capacity layer.

Advantageously, the invention allows not only considering independent throughput for devices in the RAN or in a cell, but also the combination and management of resources towards a whole set of devices in the cell. In this manner, a particular UD may benefit from resources not being efficiently used by some further UDs in a cell; for example there may be a case where a particular UD under the scope of a coverage layer but not under the scope of the capacity layer may demand traffic which may be provided by said coverage layer; however, due to the distribution of the throughput in the layer, some other further UD which may be under the scope of the capacity layer but connected to the coverage layer may be consuming part of this throughput when actually the particular UD may benefit from said part of the distributed throughput. In this case, the invention allows activating the capacity layer for the further UD thus freeing resources for being used by the particular UD.

In an embodiment of the invention the determination is to activate the capacity layer for serving at least the further UD if a further condition is met, being the traffic requirements of the further UD may be satisfied in the capacity layer.

This embodiment prevents from activating the capacity layer in those cases where a further UD may not be served by the scope of the capacity layer, and thus, reduces the energy expenses due to the useless activation of the capacity layer for said further UD.

In an embodiment of the invention the determination to activate the capacity layer for serving at least the further UD is further based on whether the traffic requirements of a particular UD are not satisfied by the coverage layer but may be improved if bandwidth resources were handed over for serving said particular UD from the further UD.

This embodiment boosts energy savings since the capacity layer is activated only if there is an improvement in throughput conditions for a particular UD or a group of UDs. As it may be understood, it prevents the capacity layer from being activated in those cases where a UD may not be benefiting from enough throughput; for example, in the case where the UD under the reach of the coverage layer requires 5Mbps, if the further UD connected to the coverage layer but under the reach of the capacity layer is only able to free 3Mbps, the defined method according to this and other embodiments may decide not to select said further UD for activating the capacity layer because there would not be any practical benefit.

In an embodiment of the invention the determination is further based on a RAN configuration.

Advantageously due to this embodiment, given the location of a UD, the cell configuration i.e. technology, bandwidth, transmitted power - which may be known by a radio base station or RBS- and possibly the number of users in the cell, it is possible to estimate the maximum achievable throughput for each UD, therefore estimating the benefits in traffic requirement of activating the capacity layer.

The invention may comprise mechanisms for establishing an order in which different UDs may be checked for proving whether a capacity layer might be activated in such a way that it would be beneficial in terms of throughput for a particular or a multitude of UD. The invention may also comprise a hierarchical order for the selection of those further UDs which may serve for a redistribution of resources.

In an embodiment of the invention, in the case when a determination is made so as to activate the capacity layer for serving a UD, a further determination is made so as to deactivate the coverage layer for said UD.

This embodiment advantageously allows a complete control of resources in the network since in case a capacity layer is activated for any UD, the coverage layer may be switched off for said UD for the purposes of saving energy.

In a second aspect of the invention there is provided a method for determining deactivation of a capacity layer in a RAN for a particular UD, said particular UD already served by said capacity layer, the determination based on the facts that

- the particular UD is in the range of coverage layer, and
- the traffic requirements of the particular UD may be satisfied in the coverage layer.

Given a distribution of capacity layer and a coverage layer, there may be UDs being served, inefficiently, by the capacity layer when actually their traffic or throughput requirements could be covered by the throughput of the coverage layer. In these cases, the invention allows an efficient handoff to the coverage layer by deactivating the capacity layer for those UDs.

In an embodiment according to the second aspect of the invention a particular UD is connected to the capacity layer, there exist at least a further UD connected to and in the range of the capacity layer, and the determination is to deactivate the capacity layer for the particular UD if the following conditions are met:

- the traffic requirements of the particular UD may be satisfied in the coverage layer,
- the traffic requirements of the further UD are not satisfied, and
- the traffic requirements of the further UD may be satisfied if the capacity layer is deactivated for the particular UD.

Advantageously, the invention allows considering the combination and management of resources towards a whole set of devices in the cell. In this manner, a further UD may benefit from resources not being efficiently used by a particular UD in a cell; for example there may the a case where a UD in a capacity layer may demand traffic which may be provided by a coverage layer and there may also be some further UD under the scope of and connected to the capacity layer sharing resources with the particular UD and which may be requiring additional throughput; in this case, resources given to the particular UD may be freed by deactivating the capacity layer for said particular UD so that the further UD benefit from them.

In an embodiment according to the second aspect of the invention, when a determination is made so as to deactivate the capacity layer for a particular UD, a further determination is made so as to activate the coverage layer for said particular UD.

Advantageously this embodiment allows the continuation of the service even if the capacity layer is deactivated for a UD or several UDs.

A method according to the second aspect of the invention may comprise mechanisms for stablishing an order in which different UDs may be checked for proving whether a capacity layer might be deactivated for each of them in such a way that it would be beneficial in terms of throughput shifted to a further UD in the capacity layer. The invention may also comprise a hierarchical order for the selection of those UDs which may serve for a redistribution of resources.

Advantageously a method according to the described embodiments in which one or more further UD operate may decide not to activate the capacity layer in cases where there is no practical benefit for a particular UD; for example in cases where freeing up certain resources from one UD to a further UD is not enough.

In a third aspect of the invention there is provided a node in a radio access network (RAN) with means adapted to implement a method according to the first aspect of the invention and/or with means adapted to implement a method according to the second aspect of the invention.

In a fourth aspect of the invention there is provided a radio access network (RAN) comprising a node according to the third aspect of the invention.

## DESCRIPTION OF THE DRAWINGS

These and other characteristics and advantages of the invention will become clearly understood in view of the detailed description of the invention which becomes apparent from preferred embodiments of the invention, given just as an example and not being limited thereto, with reference to the drawings.

Figure 1    This figure represents a Radio Base Station (RBS) which is adapted to radiate on at least two separate frequencies or two cells: The capacity layer (1) is represented inside the coverage layer (2), the former depicted in dots and the latter depicted in white.

Figure 2    This figure represents an embodiment of a method according to the invention in steps implemented in particular examples.

Figure 3    This figure shows several capacity layers (31_1, 31_2, 31_3, 31_4), a coverage layer (32), a dual layer base stations (RBS3) and single layer base stations (RBS34, RBS35, RBS36).

## DETAILED DESCRIPTION

Once the object of the invention has been outlined, specific non-limitative embodiments are described hereinafter.

The following embodiments are referred to a method for determining activation of a capacity layer (1), the determination based on both:

- geographical position of the user device (UD), and
- traffic requirements of the UD.

The parameters geographical position of the user device (UD), and traffic requirements of the UD may be collected in different manners. These data may be collected by a radio base station (RBS), such as an eNodeB. Some of the manners to collect data are listed in the following examples:

- traffic requirements / application awareness. Applications may be recognized by methods such as DPI - deep packet inspection or QCI-DSCP marking. Once the applications are identified, the expected throughput for each application may be computed for instance by considering the statistical behaviour on a cell level, or an eNode B level, or even on a network level. In an example, an engine may know that a particular application such as "Youtube" requires 3 Mbps, for instance.
- geographical position / location-awareness. There may be mainly 2 solutions:
- GPS: GPS data may be collected from the UD, therefore their position may be precisely known. By collecting statistics over a given period of time of where the users are and to which layer they are connected, a coverage map can be drawn (e.g. leaving both layers active for a time sufficient to collect statistical data). The position of the UD is compared with said map to establish their position and the possibility for them;
- Data-unaware. Based on the level of the RSRP (reference signal received power) - the received power level of the pilot signal - of the coverage layer, a threshold may be estimated and it may be considered that if a UD receives a higher power than the threshold; then the UD may also be in the coverage area of the capacity layer (1). If the UD is below threshold -receives a weaker signal-, then it may be considered that it is in the coverage layer only.

The second solution may be a compromise between complexity and precision, provided that coverage and capacity layers are co-centric.

If a UD runs multiple applications, an application aware method may estimate the total combined throughput requirement. This can be done either by

- summing up the individual required throughput figures of each application, or
- using a statistical multiplexing approach, for example the actual required throughput being a % of the sum of the individual required throughputs.

In the example described herein it is assumed that the total required throughput per UD is computed as the sum of the required throughputs of the individual applications that are running on said UD.

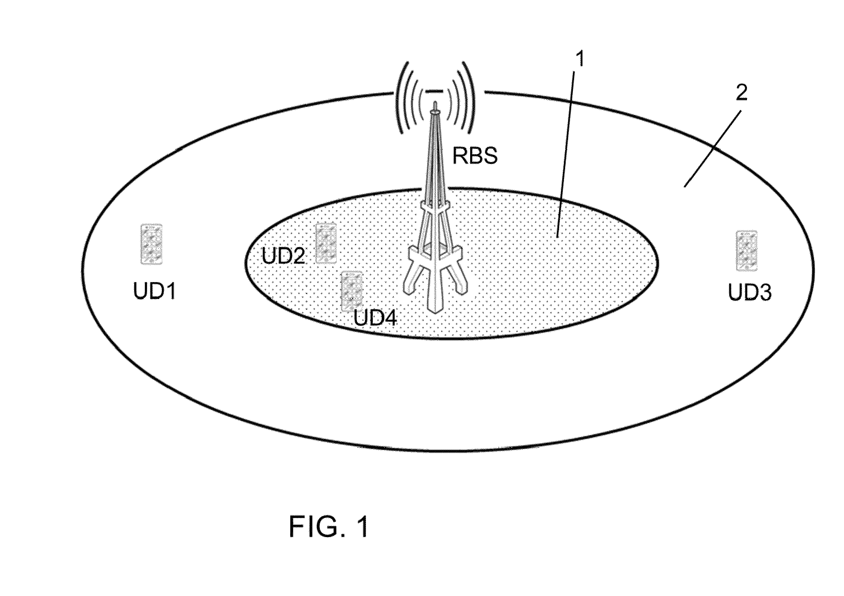

In figure 1 a Radio Base Station (RBS) is shown which is adapted to radiate on at least two separate frequencies or two cells: one coverage layer (2) working at 800MHz and one capacity layer (1) at 2.6 GHz. The capacity layer (1) is represented inside the coverage layer (2), the former depicted in dots and the latter depicted in white. The default state of the capacity layer (1) may be inactive. Several UD are represented therein, where UD1 and UD3 are located under the coverage layer (2) and UD2 and UD4 are located under the capacity layer (1). As it can be seen, UD1 and UD3 can only be served by the coverage layer (2) whereas UD2 and UD4 may be served by either the coverage layer (2) or the capacity layer (1).

By using a method according to the invention, a node in the RAN, for example the RBS may populate the following table wherein an application aware method may estimate the combined throughput requirement for each UD, and a location aware method may provide information relating to the geographical position of each UD. In an example, given the location of a UD, the cell configuration i.e. technology, bandwidth and transmitted power (data known and provided by the RBS) and the number of users in the cell, it is possible to estimate the maximum achievable throughput for each UD.

| UD | Application | Throughput requirement | | UD in capacity layer (1)? | Maximum available throughput in coverage layer (2) | Throughput requirements fulfilled by coverage layer (2)? | Maximum available throughput in capacity layer (1) | Does activation of capacity layer (1) bring benefit? |
|---|---|---|---|---|---|---|---|---|
| 1 | Instant messaging | 500Kbps | | No | 1,2Mbps | Yes | -- | No |
| | VoIP call | 700Kbps | | | | | | |
| 2 | Video | 3Mbps | | Yes | 2Mbps | No | 5Mbps | Yes (direct) |
| 3 | Video | 2,5Mbps | | No | 1Mbps | No | -- | Yes (indirect) |
| | Instant messaging | 500Kbps | | | | | | |
| 4 | mail | 200Kbps | | Yes | 500Kbps | Yes | 5Mbps | No |

The invention provides with mechanisms for deciding whether the throughput requirements for a UD are fulfilled by the coverage layer (2), and in the case where said requirements are not fulfilled, a decision is made as to whether the activation of the capacity layer (1) would provide benefits, either directly or indirectly.

In the case of UD2 the benefit would be direct, since UD2 is located within the capacity layer (1) and a better throughput is achieved in UD2 by activating the capacity layer (1) for said UD2.

In the case of UD3 the benefit would be indirect, since UD3 is located out of the reach of the capacity layer (1) and a better throughput may be achieved in UD3 by activating the capacity layer (1) for UD2 or UD4, for example, who are consuming less bandwidth resources than provided and may be handed over to the capacity layer (1); this operation may free up resources for UD3. The solution may determine that

- UD2 can be handed over to the capacity layer (1), and the benefit for UD3 would be 2 Mbps;
- UD4 may be handed over to the capacity layer (1), but it is only using 200 kbps and thus not providing a differential experience for UD3, therefore the benefit for UD3 from activating the capacity layer (1) for UD4 may be low;

The invention therefore "determines" that by steering UE2 and UE4 to the capacity layer (1), UE3 would be provided with

$$1\text{Mbps (coverage)} + 2\text{Mbps (from capacity in UD2)} + 0,2 \text{ Mbps (from capacity in UD4)}=$$

$$=3,2 \text{ Mbps,}$$

which satisfies the application requirement of UD3. In this case, it does make sense to activate the capacity layer (1).

As it is explained, an indirect benefit means that a UD can benefit from an increased throughput staying on the coverage layer (2), because some other UD has been moved from the coverage layer (2) to the capacity layer (1) (thus freeing resources).

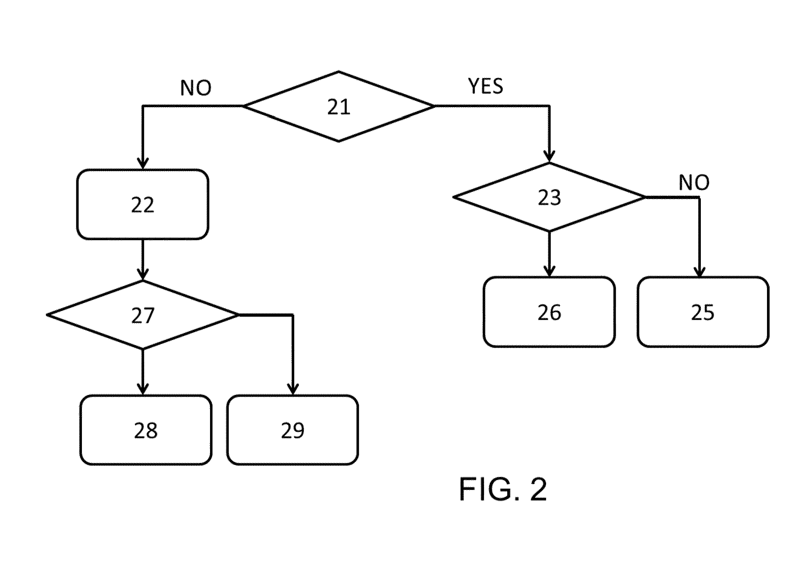

The invention, in a particular example, may be implemented with the following steps, as represented in figure 2; it is assumed that the capacity layer (1) status is inactive at the beginning:

21. checking whether there is any UD connected to the coverage layer (2) which could be served by the capacity layer (1), given its location.

22. If there is no UD connected to the coverage layer (2) which could be served by the capacity layer (1) due to its geographical position, the capacity layer (1) stays inactive for said UD or UDs.

23. If there is any UD connected to the coverage layer (2) which could be served by the capacity layer (1), then there is a check as to whether those UDs would profit from direct benefit

25. If there are no UD connected to the coverage layer (2) for which activation of the capacity layer (1) would provide direct benefit, then the capacity layer (1) stays inactive;

26. If there is any UD connected to the coverage layer (2) for which activation of the capacity layer (1) would provide direct benefit, then the capacity layer (1) is activated;

Additionally, in a particular example, the following may also be implemented:

27. If there are UD connected to the coverage layer (2) which could not be served by the capacity layer (1) due to its geographical position, then there is a check as to whether those UDs would profit from indirect benefit;

28. If there are no UDs in the coverage layer (2) which could obtain indirect benefit from activating the capacity layer (1) for other further UDs, then the capacity layer (1) stays inactive for the further UDs;

29. If there are UDs in the coverage layer (2) which could obtain indirect benefit from activating the capacity layer (1) for other further UDs, then the capacity layer (1) is activated for the further UDs.

The energy saving allowed by the invention is due to the fact that the capacity layer (1) may be activated only in cases where it is necessary.

The same mechanisms may be used by the invention to determine whether a capacity layer (1) which is active may be switched off in cases where it is enough for one or more UDs to be served by the coverage layer (2). In this case, energy savings are also provided. As a way of example, when a capacity layer is switched off on a 3-sectors cell, energy savings between 150 W and 500 W on average may be obtained. Said savings depend on factors such as the type of hardware employed, the technology, the RBS temperature, or the traffic load.

Typically in the state of the art, an operator configures a network to activate a capacity layer-switch off method during the night, when there is low traffic. Assuming 7 hours-time per activation window, the maximum daily savings per site range between 1,05 kWh and 3,5 kWh. The prior-art algorithms decide upon the re-activation of the capacity layer based on the traffic on the coverage layer (2), with knowledge of neither the user location nor application awareness. This is not as optimal as the saving due to the present invention since in the state of the art the capacity layer may be reactivated even when no actual benefit occurs. It may be estimated that, with the prior art implementations, the actual capacity layer activation occurs on 40% of the activation window, i.e. 2,8 hrs. This figure may vary depending on actual site-specific traffic conditions.

In the present invention, the switch-on of the capacity layer occurs less frequently than in the state of the art, since more conditions need to be simultaneously satisfied, being

1. the location of the users and

2. their traffic requirements.

It may be estimated that the invention provides capacity layer deactivation in a 80% of the activation window, i.e. 5,6 hrs.

Therefore, the estimated additional savings provided by a method performed according to the present invention with respect to the prior-art implementations ranges between:

- Min: (150W*5,6h/1000) - (150W*2,8/1000) = 0,42 kWh
- Max: (500W*5,6h/1000) - (500W*2,8/1000) = 1,4 kWh

In average (average between 1,4 kWh and 0,42 kWh), it may be estimated that 0,91 kWh are saved. Assuming a typical set of 5000 sites implementing the present invention, and the average saving of 0,91 kWh, the savings due to the present invention over the prior art would be of 0,91 * 5000 = 4.550 kWh/set.

A method according to the invention may be repeated periodically, with a periodicity interval defined by an operator, and/or may be triggered by events such as UDs entering and leaving the coverage layer (2).

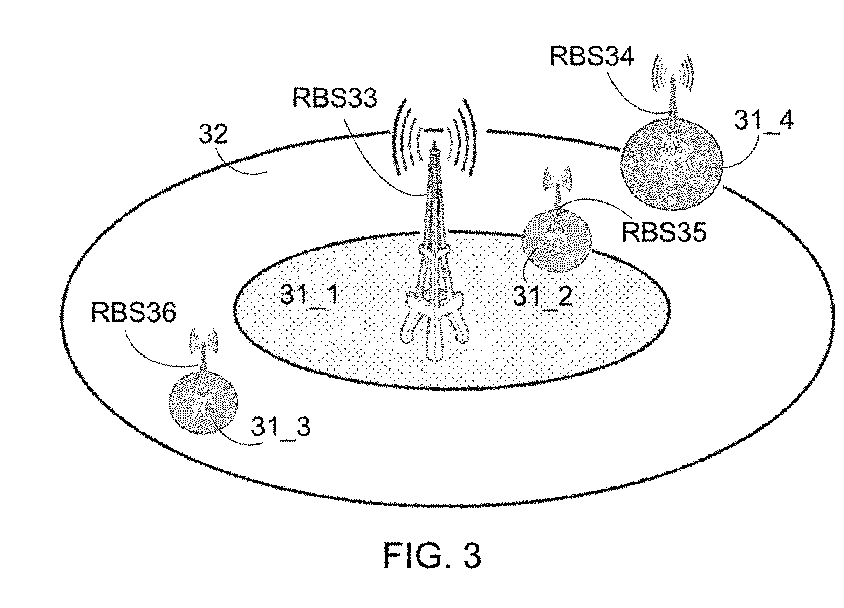

There exist scenarios wherein coverage layers are provided with along "scattered small capacity cells"; therefore there may be areas where there is only a capacity layer, and not a coverage layer, as it is shown in figure 3. This is known as "HetNet". Several capacity layers (31_1, 31_2, 31_3, 31_4) are represented as well as coverage layer (32), dual layer base stations (RBS33) and single layer base stations (RBS34, RBS35, RBS36).

There are some UD with capability of connection to one band at a time, i.e. one layer at a time. Recently, new capabilities have been introduced such as "dual carrier in dual band" and "LTE carrier aggregation", where the UD is connected to both at the same time. In this scenario, the following exemplary methodology in accordance with the present invention can be implemented:

1. A "location awareness" determination is made as to what is the UD under the scope of both the capacity and the coverage layers;

2. Further, it is determined whether the UD is under scope of both the coverage layer and the capacity layer, or only under scope of one of the two layers;

3. If the UD is under the scope of both layers, then if the UD is connected to both the capacity and the coverage layer, an "application awareness" determination is made as to what is its max throughput compared with required application throughput.

- if the throughput requirement is satisfied by the coverage layer only, the UD shall be redirected to the coverage layer only;
- Otherwise (i.e. UD requires the throughput given by the contemporary connection to both layers), the capacity layer is maintained active

4. If the UD is under the scope of only the coverage layer, then an "application awareness" determination is made as to what is its maximum throughput compared with the required application throughput assuming that the UD is connected to the coverage layer. In this case, if the throughput is not satisfied then a determination is made so as to activate the capacity layer.

5. If the UD is only connected to the capacity layer, then an "application awareness" determination is made as to what is its max throughput compared with the required application throughput assuming that the UD is connected to the capacity layer. In this case, the coverage layer may be additionally activated for the UD to connect to both.

**Claims**

1. A method for determining activation of a capacity layer (1) in a radio access network (RAN) for serving a user device UD (UD2, UD4), the determination based on both:

- geographical position of the UD, and
- traffic requirements of the UD.

**2.** A method according to claim 1 wherein the determination to activate the capacity layer (1) is further based on further UDs (UD1, UD2, UD3, UD4) in the RAN.

**3.** A method according to claim 1 wherein the determination to activate the capacity layer (1) is further based on whether:

- the geographical position of the UD (UD2, UD4) is in the range of the capacity layer (1), and
- the traffic requirements of the UD (UD2, UD4) are not satisfied by a coverage layer (2) to which the UD may be connected.

**4.** A method according to claim 3 wherein the determination to activate the capacity layer (1) is further based on whether an improvement in the traffic situation in the UD is improved by activating the capacity layer (1) for said UD.

**5.** A method according to claim 2 wherein

- a particular UD (UD1, UD3) is connected to the coverage layer (2),
- there exist at least a further UD (UD2, UD4) connected to the coverage layer (2), and
- the determination to activate the capacity layer (1) for serving at least the further UD is based on whether the following conditions are met:

- the particular UD (UD1, UD3) is not in the range of the capacity layer (1),
- the traffic requirements of the particular UD (UD1, UD3) are not satisfied by the coverage layer (2), and
- the further UD (UD2, UD4) in the coverage layer (2) is in the range of capacity layer (1).

**6.** A method according to claim 5 wherein the determination is to activate the capacity layer (1) for serving at least the further UD (UD2, UD4) if a further condition is met, being

- the traffic requirements of the further UD (UD2, UD4) may be satisfied in the capacity layer (1).

**7.** A method according to claim 5 or 6 wherein the determination to activate the capacity layer (1) for serving at least the further UD (UD2, UD4) is further based on whether the traffic requirements of a particular UD (UD1, UD3) are not satisfied by the coverage layer (2) but may be improved if bandwidth resources were handed over for serving said particular UD from the further UD.

**8.** A method according to any of the preceding claims wherein the determination is further based on a RAN configuration.

**9.** A method according to any of the preceding claims wherein in the case when a determination is made so as to activate the capacity layer (1) for serving a UD (UD1, UD2, UD3, UD4), a further determination is made so as to deactivate the coverage layer (2) for said UD.

**10.** A method for determining deactivation of a capacity layer (1) in a radio access network (RAN) for a particular UD, said particular UD (UD2, UD4) already served by said capacity layer (1), the determination based on the facts that

- the particular UD (UD2, UD4) is in the range of coverage layer (2), and
- the traffic requirements of the particular UD may be satisfied in the coverage layer (2).

**11.** A method according to claim 10 wherein

- a particular UD (UD2, UD4) is connected to the capacity layer (1),
- there exist at least a further UD (UD2, UD4) connected to and in the range of the capacity layer (1), and
- the determination is to deactivate the capacity layer (1) for the particular UD (UD2, UD4) if the following conditions are met:

- the traffic requirements of the particular UD (UD2, UD4) may be satisfied in the coverage layer (2),
- the traffic requirements of the further UD (UD2, UD4) are not satisfied, and
- the traffic requirements of the further UD (UD2, UD4) may be satisfied if the capacity layer (1) is deactivated for the particular UD.

**12.** A method according to any of claims 10 or 11 wherein in the case when a determination is made so as to deactivate the capacity layer (1) for a particular UD (UD2, UD4), a further determination is made so as to activate the coverage layer (2) for said particular UD (UD2, UD4).

13. Node in a radio access network (RAN) with means adapted to implement a method according to any of claims 1 to 9 and/or adapted to implement a method according to any of claims 10 to 12.

14. Radio access network (RAN) comprising a node according to claim 13.

FIG. 1

FIG. 2

FIG. 3

**Europäisches Patentamt**
**European Patent Office**
**Office européen des brevets**

# EUROPEAN SEARCH REPORT

Application Number

EP 14 38 2431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/142328 A1 (AWONIYI OLUFUNMILOLA O [US] ET AL) 7 June 2012 (2012-06-07) * abstract * * paragraph [0010] - paragraph [0104] * * figures 1-17 * ----- | 1-14 | INV. H04W52/02 |
| X | EP 2 523 507 A1 (ALCATEL LUCENT [FR]) 14 November 2012 (2012-11-14) * abstract * * paragraph [0004] - paragraph [0048] * * figures 1-6 * ----- | 1-14 | |
| X | US 2014/128078 A1 (ZHU YAJUN [CN] ET AL) 8 May 2014 (2014-05-08) * abstract * * paragraph [0019] - paragraph [0064] * * figures 1-12 * ----- | 1-14 | |

**TECHNICAL FIELDS SEARCHED (IPC)**

H04W

The present search report has been drawn up for all claims

| Place of search | Date of completion of the search | Examiner |
|---|---|---|
| The Hague | 11 May 2015 | Tzimeas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 38 2431

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2015

| Patent document cited in search report | | | Publication date | Patent family member(s) | | | Publication date |
|---|---|---|---|---|---|---|---|
| US 2012142328 | A1 | | 07-06-2012 | CN | 103299677 | A | 11-09-2013 |
| | | | | EP | 2638737 | A2 | 18-09-2013 |
| | | | | EP | 2827643 | A1 | 21-01-2015 |
| | | | | JP | 2014501459 | A | 20-01-2014 |
| | | | | US | 2012142328 | A1 | 07-06-2012 |
| | | | | US | 2015103717 | A1 | 16-04-2015 |
| | | | | WO | 2013002825 | A2 | 03-01-2013 |
| EP 2523507 | A1 | | 14-11-2012 | NONE | | | |
| US 2014128078 | A1 | | 08-05-2014 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014024001 A1

- US 20110044284 A1